(19) **Europäisches Patentamt / European Patent Office / Office européen des brevets**

(11) **EP 4 001 519 B1**

(12) **EUROPEAN PATENT SPECIFICATION**

(45) Date of publication and mention of the grant of the patent:
**06.08.2025 Bulletin 2025/32**

(21) Application number: **20905541.7**

(22) Date of filing: **21.10.2020**

(51) International Patent Classification (IPC):
**E02F 9/22** (2006.01)   **F16K 31/383** (2006.01)
**F15B 11/042** (2006.01)

(52) Cooperative Patent Classification (CPC):
**E02F 9/2282; E02F 9/2012; E02F 9/2228;**
**E02F 9/2267; E02F 9/2285; E02F 9/2292;**
**E02F 9/2296; F15B 11/042;** E02F 3/435;
E02F 9/2033; F15B 11/17; F15B 13/0405;
F15B 13/043; F15B 2211/3144; F15B 2211/31541;
(Cont.)

(86) International application number:
**PCT/JP2020/039612**

(87) International publication number:
**WO 2021/131277 (01.07.2021 Gazette 2021/26)**

(54) **WORK MACHINE**

ARBEITSMASCHINE

MACHINE DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2019   JP 2019238879**

(43) Date of publication of application:
**25.05.2022   Bulletin 2022/21**

(73) Proprietor: **Hitachi Construction Machinery Co., Ltd.**
**Tokyo 110-0015 (JP)**

(72) Inventors:
• **KUMAGAI, Kento**
  **Tsuchiura-shi, Ibaraki 300-0013 (JP)**
• **IMURA, Shinya**
  **Tsuchiura-shi, Ibaraki 300-0013 (JP)**
• **SUGIYAMA, Genroku**
  **Tsuchiura-shi, Ibaraki 300-0013 (JP)**
• **KODAKA, Katsuaki**
  **Tsuchiura-shi, Ibaraki 300-0013 (JP)**
• **TSURUGA, Yasutaka**
  **Tsuchiura-shi, Ibaraki 300-0013 (JP)**
• **CHIBA, Takaaki**
  **Tsuchiura-shi, Ibaraki 300-0013 (JP)**

(74) Representative: **Manitz Finsterwald**
**Patent- und Rechtsanwaltspartnerschaft mbB**
**Martin-Greif-Straße 1**
**80336 München (DE)**

(56) References cited:
| | |
|---|---|
| **EP-A1- 0 620 370** | **EP-A1- 1 536 071** |
| **EP-A1- 3 822 418** | **JP-A- 2004 270 900** |
| **JP-A- 2014 031 827** | **JP-A- 2014 185 665** |
| **JP-A- 2017 137 968** | **JP-A- H06 193 604** |
| **JP-A- H06 294 402** | **JP-A- H09 177 711** |
| **JP-B2- 3 144 915** | **US-A1- 2021 002 868** |

(52) Cooperative Patent Classification (CPC): (Cont.)
F15B 2211/41509; F15B 2211/426; F15B 2211/428;
F15B 2211/455; F15B 2211/57; F15B 2211/575;
F15B 2211/5753; F15B 2211/6306;
F15B 2211/6309; F15B 2211/6346; F15B 2211/635;
F15B 2211/67

## Description

Technical Field

The present invention relates to a work machine such as a hydraulic excavator.

Background Art

A work machine such as a hydraulic excavator includes a machine body including a swing structure; and a work device (front device) attached to the swing structure. The work device includes a boom (front device member) connected to the swing structure in such a manner as to be rotatable in an upward-downward direction; an arm (front device member) connected to a distal end of the boom in such a manner as to be rotatable in a forward-rearward direction or the upward-downward direction; a bucket (front device member) connected to a distal end of the arm in such a manner as to be rotatable in the forward-rearward direction or the upward-downward direction; a boom cylinder (actuator) that drives the boom; an arm cylinder (actuator) that drives the arm; and a bucket cylinder (actuator) that drives the bucket. It is not easy to excavate a predetermined region by operating the front device members of the work machine by respective manual control levers. An operator needs to have skilled operating techniques.

Accordingly, a technology for facilitating such work has been proposed (Patent Document 1).

An area limiting excavation control system of a construction machine described in Patent Document 1 includes detecting means for detecting the position of a front device; a controller including a computing section configured to compute the position of the front device on the basis of a signal from the detecting means, a section configured to set an entry prohibiting region that the front device is prohibited from entering, and a computing section configured to calculate a control gain of a control lever signal from the entry prohibiting region and the front device position; and actuator control means for controlling the movement of an actuator from the calculated control gain. According to such a configuration, the lever operation signal is controlled according to a distance to a boundary line of the entry prohibiting region. Thus, even when an operator erroneously tries to move a distal end of a bucket to the entry prohibiting region, the locus of the distal end of the bucket is automatically controlled in such a manner as to be along the boundary. Consequently, anyone can perform stable work with high accuracy without depending on a degree of mastery of the operating techniques by the operator.

Here, the following problems are presented when the construction machine described in Patent Document 1 is assumed to perform switching between manual operation by the operator and a function of automatic control of the machine body according to work contents. When the automatic control of the machine body is performed according to a command from the controller, it is important for a distal end of the front device to move accurately along a target locus, and this requires a target flow rate to be accurately supplied to the actuator. However, in the area limiting excavation control system of Patent Document 1, the opening amount of a directional control valve is controlled according to a lever operation amount. Hence, flow rate supply to the actuator may be unstable due to a change in a differential pressure across the directional control valve, the change accompanying load variation of the actuator.

A technology illustrated in Patent Document 2 is proposed as one technology for solving such problems.

In a hydraulic control valve system described in Patent Document 2, a poppet type auxiliary flow control valve that performs pressure compensation for each directional control valve of each actuator is disposed in series with each directional control valve. Thus, not only is the opening amount of the directional control valve controlled for the input amount of a control lever, but also a differential pressure across the directional control valve is controlled by the pressure compensating valve. It is thereby possible to perform accurate flow rate supply to the actuator without depending on a load on the actuator.

Prior Art Document

Patent Documents

Patent Document 1: Japanese Patent No. 3056254
Patent Document 2: Japanese Patent No. 3144915

Problems to be Solved by the Invention

In the hydraulic control valve system described in Patent Document 2, the main valve of the auxiliary flow control valve has a poppet shape. Thus, there is a small flow loss as compared with a spool type valve, and a check function can be provided because there is substantially no leak at a time of seating. In addition, the main valve has high responsiveness because a valve shift is decided by a balance of forces caused by pressures on a pump side, an actuator side, and a back pressure side.

However, the poppet valve generally tends to be affected by a fluid force, and also tends to be affected by pulsation or a pressure variation because of the above-described high responsiveness to a pressure change. Therefore, the behavior of a valve body tends to be destabilized, and accuracy of flow rate control tends to be decreased under a condition where control needs to be performed at small opening at a time of a small flow rate, a high pressure difference, or the like, in particular.

On the other hand, in work which uses the automatic control of a work machine such as a hydraulic excavator and which requires accuracy of control of an actuator, in particular, the actuator needs to be operated at low speed while an excavation load is applied thereto. At this time, flow conditions surrounding a valve controlling a flow rate supplied to the actuator are often a small flow rate and a high pressure difference.

Therefore, in work that requires accuracy of control of the actuator when the automatic control of the work machine such as the hydraulic excavator is performed by using the configuration of the hydraulic control valve system described in Patent Document 2, the flow rate control accuracy of the auxiliary flow control valve may be decreased, and a decrease in accuracy of control of the actuator may be incurred.

JP H06 294402 A discloses an oil pressure control valve device having a direction change-over valve, a sheet valve and a pilot control valve. The sheet valve determines the amount of displacement of a sheet valve-disc by the pilot flow rate passing through a control variable throttle. The pilot flow rate is controlled by the pilot control valve in response to the differential pressure across a main variable throttle of the direction change-over valve.

Summary of the Invention

It is the object of the invention to provide a work machine that can improve accuracy of control of an actuator when a pressure difference between a hydraulic pump and the actuator is large and the demanded flow rate of the actuator is small.

Means for Solving the Problems

The above object is accomplished by the features of claim 1. A work machine has the features of claim 1. It includes a machine body, a work device attached to the machine body, a plurality of actuators that drive the machine body or the work device, a hydraulic pump, a plurality of directional control valves that are connected in parallel to a delivery line of the hydraulic pump and adjust flows of hydraulic fluid supplied from the hydraulic pump to the plurality of actuators, a control lever for giving an instruction for operation of the plurality of actuators, a pilot pump, a solenoid valve unit that reduces a pressure of hydraulic fluid supplied from the pilot pump, and outputs the reduced pressure as operation pressures of the plurality of directional control valves, a controller that outputs a command to the solenoid valve unit according to an operation instruction amount from the control lever, and auxiliary flow rate controllers that are respectively arranged upstream of the plurality of directional control valves and limit flow rates of hydraulic fluid supplied from the hydraulic pump to the plurality of directional control valves. The auxiliary flow rate controllers each include a seat type main valve, a control variable restrictor that changes an opening area according to an amount of movement of a valve body of the main valve, a pilot line that connects a downstream side of the main valve and a downstream side of the control variable restrictor to each other and decides the amount of movement of the valve body according to a passing flow rate, and a spool type pilot variable restrictor that is disposed on the pilot line and changes an opening area according to a command from the controller. The auxiliary flow rate controllers are each configured such that an opening area of the main valve changes between a maximum opening area and zero according to the opening area of the pilot variable restrictor in a case where the opening area of the pilot variable restrictor is equal to or more than a predetermined opening area and that the opening area of the main valve is zero irrespective of the opening area of the pilot variable restrictor in a case where the opening area of the pilot variable restrictor is less than the predetermined opening area.

According to the present invention configured as described above, in an operation performed when the demanded flow rate of an actuator is large or when a pressure difference between the hydraulic pump and the actuator is small, that is, in an operation in which the opening amount of the auxiliary flow rate controller needs to be increased, the opening amount of the auxiliary flow rate controller can be adjusted by a total opening area of the pilot variable restrictor and the main valve by opening the main valve together with the pilot variable restrictor.

On the other hand, in an operation performed when the pressure difference between the hydraulic pump and the actuator is large and the demanded flow rate of the actuator is small, that is, in an operation in which the opening amount of the auxiliary flow rate controller needs to be decreased, the opening amount of the auxiliary flow rate controller can be adjusted by only the opening area of the pilot variable restrictor by closing the seat type main valve and opening only the spool type pilot variable restrictor. It is therefore possible to adjust with high accuracy the flow rate supplied to the actuator and thus improve accuracy of control of the actuator.

Advantages of the Invention

The work machine according to the present invention can improve accuracy of control of the actuator when the pressure difference between the hydraulic pump and the actuator is large and the demanded flow rate of the actuator is small.

Brief Description of the Drawings

FIG. 1 is a side view of a hydraulic excavator according to embodiments of the present invention.
FIG. 2A is a circuit diagram (1/2) of a hydraulic drive system in a first embodiment of the present invention.
FIG. 2B is a circuit diagram (2/2) of the hydraulic drive system in the first embodiment of the present invention.

FIG. 3 is a functional block diagram of a controller depicted in FIG. 2B.

FIG. 4A is a flowchart (1/3) depicting computation processing of the controller depicted in FIG. 2B.

FIG. 4B is a flowchart (2/3) depicting computation processing of the controller depicted in FIG. 2B.

FIG. 4C is a flowchart (3/3) depicting computation processing of the controller depicted in FIG. 2B.

FIG. 5 is a sectional view of an auxiliary flow rate controller in the first embodiment of the present invention.

FIG. 6 is a diagram of opening areas of the auxiliary flow rate controller in the first embodiment of the present invention.

FIG. 7 is a diagram of opening areas of an auxiliary flow rate controller in a second embodiment of the present invention.

FIG. 8A is a circuit diagram (1/2) of a hydraulic drive system in the second embodiment of the present invention.

FIG. 8B is a circuit diagram (2/2) of the hydraulic drive system in the second embodiment of the present invention.

FIG. 9 is a flowchart depicting details of control enabling processing in computation processing of a controller in a third embodiment of the present invention.

Modes for Carrying Out the Invention

Description will hereinafter be made with reference to the drawings by taking, for example, a hydraulic excavator as a work machine according to embodiments of the present invention. Incidentally, in the figures, similar members are identified by the same reference numerals, and repeated description thereof will be omitted as appropriate.

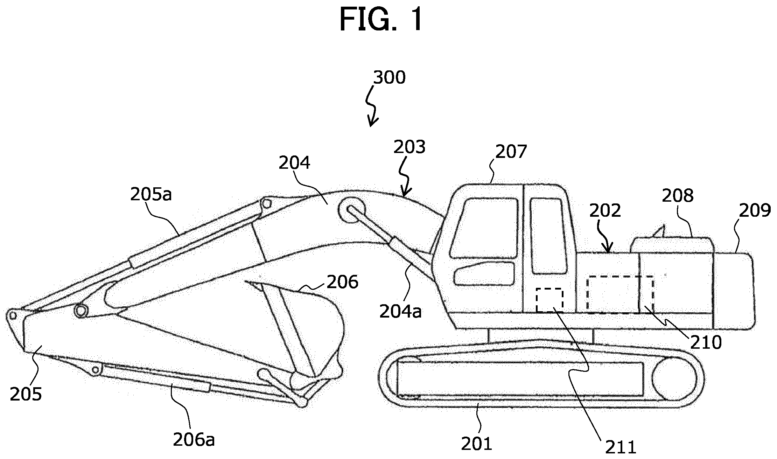

FIG. 1 is a side view of a hydraulic excavator according to the present embodiments.

As depicted in FIG. 1, the hydraulic excavator 300 includes a track structure 201; a swing structure 202 that is swingably disposed on the track structure 201 and constitutes a machine body; and a work device 203 that is attached to the swing structure 202 in such a manner as to be rotatable in an upward-downward direction and performs excavation work on soil or the like. The swing structure 202 is driven by a swing motor 211.

The work device 203 includes a boom 204 attached to the swing structure 202 in such a manner as to be rotatable in the upward-downward direction; an arm 205 attached to a distal end of the boom 204 in such a manner as to be rotatable in the upward-downward direction; and a bucket 206 attached to a distal end of the arm 205 in such a manner as to be rotatable in the upward-downward direction. The boom 204 is driven by a boom cylinder 204a. The arm 205 is driven by an arm cylinder 205a. The bucket 206 is driven by a bucket cylinder 206a.

A cab 207 is provided at a front side position on the swing structure 202. A counterweight 209 that ensures a weight balance is provided at a rear side position on the swing structure 202. A machine room 208 that houses an engine, hydraulic pumps, and the like is provided between the cab 207 and the counterweight 209. A control valve 210 is installed in the machine room 208.

The hydraulic excavator 300 according to the present embodiments includes a hydraulic drive system to be described in the following embodiment.

[First Embodiment]

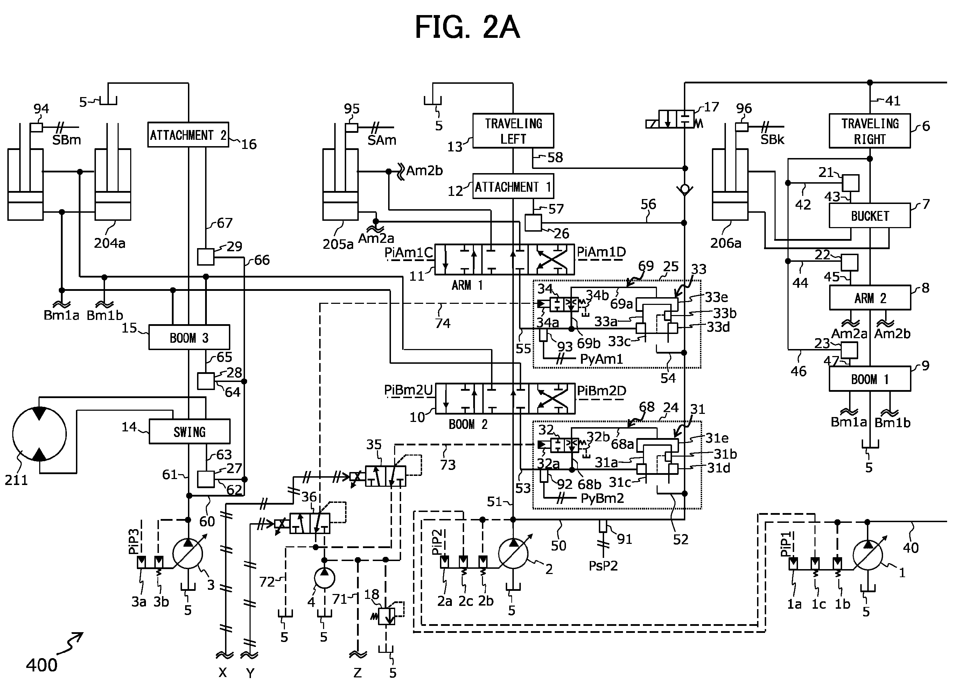

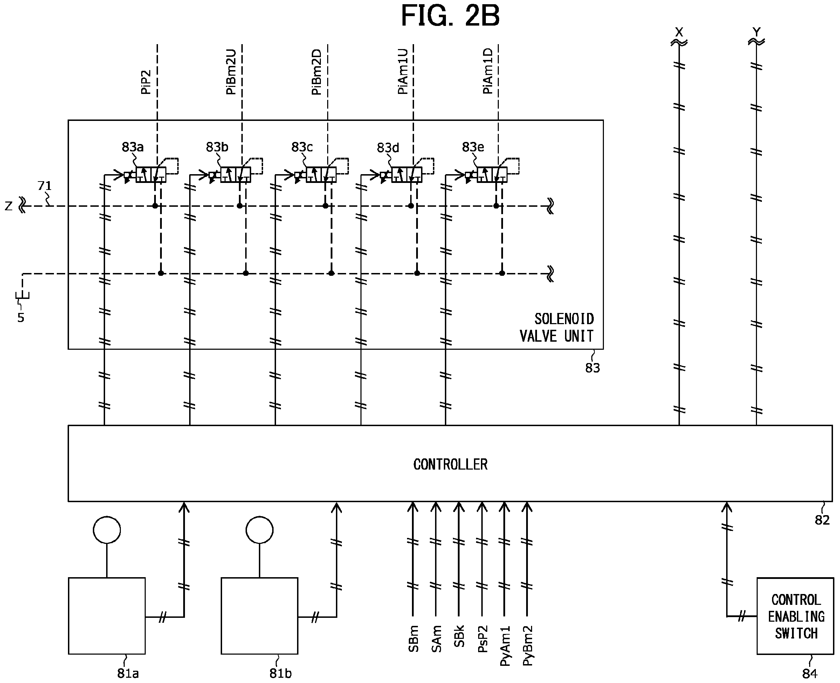

FIG. 2A and FIG. 2B are circuit diagrams of a hydraulic drive system in a first embodiment of the present invention.

(1) Configuration

A hydraulic drive system 400 in the first embodiment includes three main hydraulic pumps driven by the engine not depicted, for example, a first hydraulic pump 1, a second hydraulic pump 2, and a third hydraulic pump 3 each constituted by a variable displacement type hydraulic pump. In addition, the hydraulic drive system 400 includes a pilot pump 4 driven by the engine not depicted, and also includes a hydraulic operating fluid tank 5 that supplies oil to the first to third hydraulic pumps 1 to 3 and the pilot pump 4.

The tilting angle of the first hydraulic pump 1 is controlled by a regulator attached to the first hydraulic pump 1. The regulator of the first hydraulic pump 1 includes a flow rate control command pressure port 1a, a first hydraulic pump self-pressure port 1b, and a second hydraulic pump self-pressure port 1c. The tilting angle of the second hydraulic pump 2 is controlled by a regulator attached to the second hydraulic pump 2. The regulator of the second hydraulic pump 2 includes a flow rate control command pressure port 2a, a second hydraulic pump self-pressure port 2b, and a first hydraulic pump self-pressure port 2c. The tilting angle of the third hydraulic pump 3 is controlled by a regulator attached to the third hydraulic pump 3. The regulator of the third hydraulic pump 3 includes a flow rate control command pressure port 3a and a third hydraulic pump self-pressure port 3b.

A delivery line 40 of the first hydraulic pump 1 is connected to the hydraulic operating fluid tank 5 via a center bypass line 41. Arranged on the center bypass line 41 are, in order from an upstream side, a right travelling directional control valve 6 that controls the driving of a right travelling motor, not depicted, of a pair of travelling motors for driving the track structure 201, a bucket directional control valve 7 that controls a flow of hydraulic fluid supplied to the bucket cylinder 206a, a second arm directional control valve 8 that controls a flow of hydraulic fluid supplied to the arm cylinder 205a, and a first boom directional control valve 9 that controls a flow of hydraulic fluid supplied to the boom cylinder 204a. Respective supply ports of the bucket directional control valve 7, the second arm directional control valve 8, and the first boom directional control valve 9 are connected in parallel to a part of the center bypass line 41, the part connecting the right travelling directional control valve 6 and the bucket directional control valve 7 to each other, via hydraulic fluid lines 42 and 43, hydraulic fluid lines 44 and 45, and hydraulic fluid lines 46 and 47, respectively.

A delivery line 50 of the second hydraulic pump 2 is connected to the hydraulic operating fluid tank 5 via a center bypass line 51, and is connected to the delivery line 40 of the first hydraulic pump 1 via a confluence valve 17. Arranged on the center bypass line 51 are, in order from an upstream side, a second boom directional control valve 10 that controls a flow of hydraulic fluid supplied to the boom cylinder 204a, a first arm directional control valve 11 that controls a flow of hydraulic fluid supplied to the arm cylinder 205a, a first attachment directional control valve 12 that controls a flow of hydraulic fluid supplied to a first actuator, not depicted, for driving a first special attachment such as a pulverizer provided in place of the bucket 206, for example, and a left travelling directional control valve 13 that controls the driving of a left travelling motor, not depicted, of the pair of travelling motors for driving the track structure 201. Respective supply ports of the second boom directional control valve 10, the first arm directional control valve 11, the first attachment directional control valve 12, and the left travelling directional control valve 13 are connected in parallel to the delivery line 50 of the second hydraulic pump 2 via hydraulic fluid lines 52 and 53, hydraulic fluid lines 54 and 55, hydraulic fluid lines 56 and 57, and a hydraulic fluid line 58, respectively.

A delivery line 60 of the third hydraulic pump 3 is connected to the hydraulic operating fluid tank 5 via a center bypass line 61. Arranged on the center bypass line 61 are, in order from an upstream side, a swing directional control valve 14 that controls a flow of hydraulic fluid supplied to the swing motor 211 for driving the swing structure 202, a third boom directional control valve 15 that controls a flow of hydraulic fluid supplied to the boom cylinder 204a, and a second attachment directional control valve 16. When a second special attachment provided with a second actuator is fitted in addition to the first special attachment, or when the second special attachment provided with two actuators, that is, the first actuator and the second actuator is fitted in place of a first special actuator, the second attachment directional control valve 16 is used to control a flow of hydraulic fluid supplied to the second actuator. Respective supply ports of the swing directional control valve 14, the third boom directional control valve 15, and the second attachment directional control valve 16 are connected in parallel to the delivery line 60 of the third hydraulic pump 3 via hydraulic fluid lines 62 and 63, hydraulic fluid lines 64 and 65, and hydraulic fluid lines 66 and 67, respectively.

The boom cylinder 204a, the arm cylinder 205a, and the bucket cylinder 206a are respectively provided with stroke sensors 94, 95, and 96 that detect a stroke amount, with an objective of obtaining the operation state of the hydraulic excavator 300. Incidentally, means for obtaining the operation state of the hydraulic excavator 300 is various, such as inclination sensors, rotation angle sensors, or IMUs, and is not limited to the above-described stroke sensors.

The hydraulic fluid lines 42 and 43 connected to the supply port of the bucket directional control valve 7, the hydraulic fluid lines 44 and 45 connected to the supply port of the second arm directional control valve 8, and the hydraulic fluid lines 46 and 47 connected to the supply port of the first boom directional control valve 9 are respectively provided with auxiliary flow rate controllers 21, 22, and 23 that limit the flow rate of the hydraulic fluid supplied from the first hydraulic pump 1 to each directional control valve at a time of a combined operation.

The hydraulic fluid lines 52 and 53 connected to the supply port of the second boom directional control valve 10, the hydraulic fluid lines 54 and 55 connected to the supply port of the first arm directional control valve 11, and the hydraulic fluid lines 56 and 57 connected to the supply port of the first attachment directional control valve 12 are respectively provided with auxiliary flow rate controllers 24, 25, and 26 that limit the flow rate of the hydraulic fluid supplied from the second hydraulic pump 2 to each directional control valve at the time of the combined operation.

The hydraulic fluid lines 62 and 63 connected to the supply port of the swing directional control valve 14, the hydraulic fluid lines 64 and 65 connected to the supply port of the third boom directional control valve 15, and the hydraulic fluid lines 66 and 67 connected to the supply port of the second attachment directional control valve 16 are respectively provided with auxiliary flow rate controllers 27, 28, and 29 that limit the flow rate of the hydraulic fluid supplied from the third hydraulic pump 3 to each directional control valve at the time of the combined operation.

A delivery port of the pilot pump 4 is connected to the hydraulic operating fluid tank 5 via a pilot relief valve 18 for generation of a pilot primary pressure, and is connected to a solenoid valve unit 83 via a hydraulic fluid line 71. The solenoid valve unit 83 includes solenoid proportional pressure reducing valves 83a, 83b, 83c, 83d, and 83e. One input ports of the solenoid proportional pressure reducing valves 83a to 83e are connected to the hydraulic fluid line 71. Other input ports of the solenoid proportional pressure reducing valves 83a to 83e are connected to the hydraulic operating fluid tank 5. An output port of the solenoid proportional pressure reducing valve 83a is connected to the flow rate control command pressure port 2a of the regulator of the second hydraulic pump 2. Output ports of the solenoid proportional pressure reducing valves 83b and 83c are connected to pilot ports of the second boom directional control valve 10. Output ports of the solenoid proportional pressure reducing valves 83d and 83e are connected to pilot ports of the first arm directional control valve 11. The solenoid proportional pressure reducing valves 83a to 83e each reduce the pilot primary pressure according to a command electric signal from a controller 82, and output the pilot primary pressure as a pilot command pressure of the directional control valve.

Incidentally, for simplification of the description, the following are not depicted: solenoid proportional pressure reducing valves for the flow rate control command pressure ports 1a and 3a of the regulators of the first hydraulic pump 1 and the third hydraulic pump 3, solenoid proportional pressure reducing valves for the right travelling directional control valve 6, solenoid proportional pressure reducing valves for the bucket directional control valve 7, solenoid proportional pressure reducing valves for the second arm directional control valve 8, solenoid proportional pressure reducing valves for the first boom directional control valve 9, solenoid proportional pressure reducing valves for the first attachment directional control valve 12, solenoid proportional pressure reducing valves for the left travelling directional control valve 13, solenoid proportional pressure reducing valves for the swing directional control valve 14, solenoid proportional pressure reducing valves for the third boom directional control valve 15, and solenoid proportional pressure reducing valves for the second attachment directional control valve 16.

In the first embodiment, the auxiliary flow rate controller 24 includes a seat type main valve 31 that forms an auxiliary variable restrictor; a control variable restrictor 31b that is provided to a valve body 31a of the main valve 31, and changes an opening area according to an amount of movement of the valve body 31a; and a pilot variable restrictor 32. A housing including the main valve 31 has a first pressure chamber 31c formed in a connecting portion of the main valve 31 and the hydraulic fluid line 52, a second pressure chamber 31d formed in a connecting portion of the main valve 31 and the hydraulic fluid line 53, and a third pressure chamber 31e formed in such a manner as to communicate with the first pressure chamber 31c via the control variable restrictor 31b. The third pressure chamber 31e and the pilot variable restrictor 32 are connected to each other by a hydraulic fluid line 68a. The pilot variable restrictor 32 and the hydraulic fluid line 53 are connected to each other by a hydraulic fluid line 68b. The hydraulic fluid lines 68a and 68b form a pilot line 68.

A pilot port 32a of the pilot variable restrictor 32 is connected to an output port of a solenoid proportional pressure reducing valve 35. A supply port of the solenoid proportional pressure reducing valve 35 is connected to the delivery port of the pilot pump 4. A tank port of the solenoid proportional pressure reducing valve 35 is connected to the hydraulic operating fluid tank 5. The solenoid proportional pressure reducing valve 35 reduces the pilot primary pressure according to a command electric signal from the controller 82, and outputs the pilot primary pressure as a pilot command pressure of the pilot variable restrictor 32.

The delivery line 50 of the second hydraulic pump 2 is provided with a pressure sensor 91. The hydraulic fluid line 53 that connects the second boom directional control valve 10 and the auxiliary flow rate controller 24 to each other is provided with a pressure sensor 92.

Incidentally, though partly not depicted for simplification of the description, the auxiliary flow rate controllers 21 to 29 and peripheral apparatuses, piping, and wiring all have same configurations.

The hydraulic drive system 400 in the first embodiment has a control lever 81a capable of performing switching operation on the first boom directional control valve 9 and the second boom directional control valve 10 and a control lever 81b capable of performing switching operation on the first arm directional control valve 11 and the second arm directional control valve 8. Incidentally, for simplification of the description, the following are not depicted: a right travelling control lever that performs switching operation on the right travelling directional control valve 6, a bucket control lever that performs switching operation on the bucket directional control valve 7, a first attachment control lever that performs switching operation on the first attachment directional control valve 12, a left travelling control lever that performs switching operation on the left travelling directional control valve 13, a swing control lever that performs switching operation on the swing directional control valve 14, and a second attachment control lever that performs switching operation on the second attachment directional control valve 16.

The hydraulic drive system 400 in the first embodiment includes the controller 82. Output values of the control levers 81a and 81b, output values of the pressure sensors 91, 92, and 93, output values of the stroke sensors 94, 95, and 96, and a command value of a control enabling switch 84 are input to the controller 82. In addition, the controller 82 outputs command electric signals to each solenoid proportional pressure reducing valve included in the solenoid valve unit 83 and the solenoid proportional pressure reducing valves 35 and 36 (and the solenoid proportional pressure reducing valves not depicted).

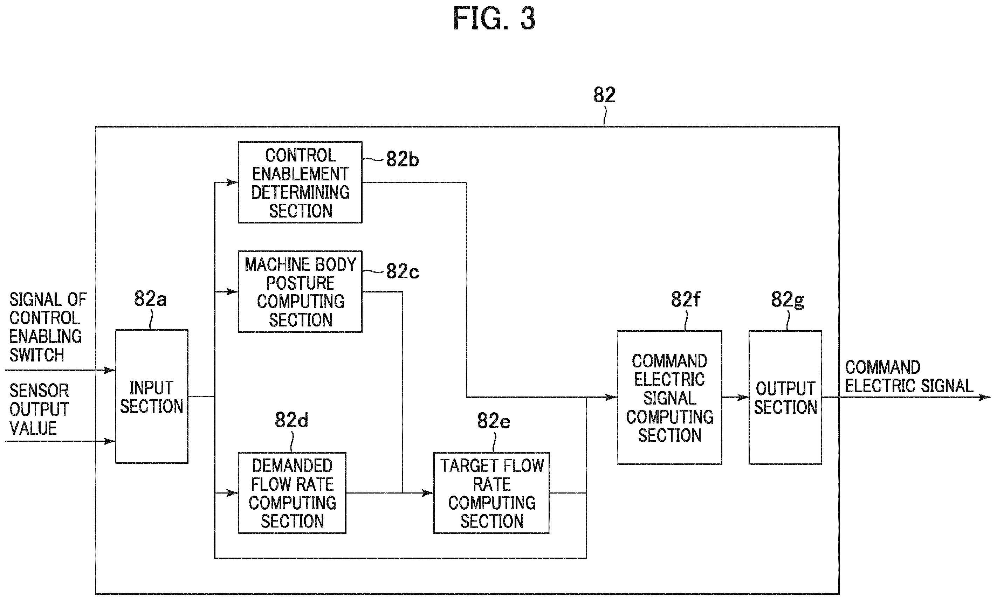

FIG. 3 is a functional block diagram of the controller 82. In FIG. 3, the controller 82 includes an input section 82a, a control enablement determining section 82b, a machine body posture computing section 82c, a demanded flow rate computing section 82d, a target flow rate computing section 82e, a command electric signal computing section 82f, and an output section 82g.

The input section 82a obtains the signal of the control enabling switch 84 and the output values of the respective sensors. The control enablement determining section 82b determines whether to enable or disable region limiting control on the basis of the signal of the control enabling switch 84. The region limiting control is control that limits flow rates supplied to the actuators, to prevent the work device 203 from entering a preset region. The machine body posture computing section 82c computes the postures of the machine body 202 and the work device 203 on the basis of the sensor output values. The demanded flow rate computing section 82d computes demanded flow rates of the actuators on the basis of the sensor output values. The target flow rate computing section 82e computes target flow rates of the actuators on the basis of the postures of the machine body 202 and the work device 203 and the demanded flow rates of the actuators. The command electric signal computing section 82f computes command electric signals on the basis of a determination result from the control enablement determining section 82b, the target flow rates from the target flow rate computing section 82e, and the pressure sensor output values from the input section 82a. The output section 82g generates command electric signals on the basis of a result from the command electric signal computing section 82f, and outputs the command electric signals to each solenoid proportional pressure reducing valve of the solenoid valve unit 83 and the solenoid proportional pressure reducing valves 35 and 36.

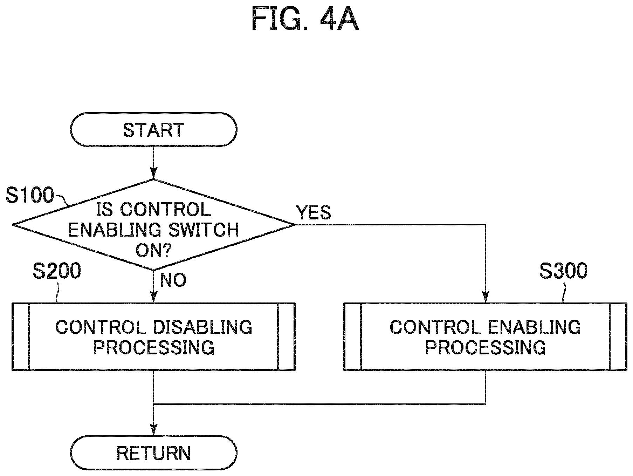

FIG. 4A is a flowchart depicting computation processing of the controller 82 in the first embodiment. The controller 82 determines whether or not the control enabling switch 84 is ON (step S100). The controller 82 performs control disabling processing (step S200) when the controller 82 determines that the control enabling switch 84 is OFF (NO). The controller 82 performs control enabling processing (step S300) when the controller 82 determines that the control enabling switch 84 is ON (YES).

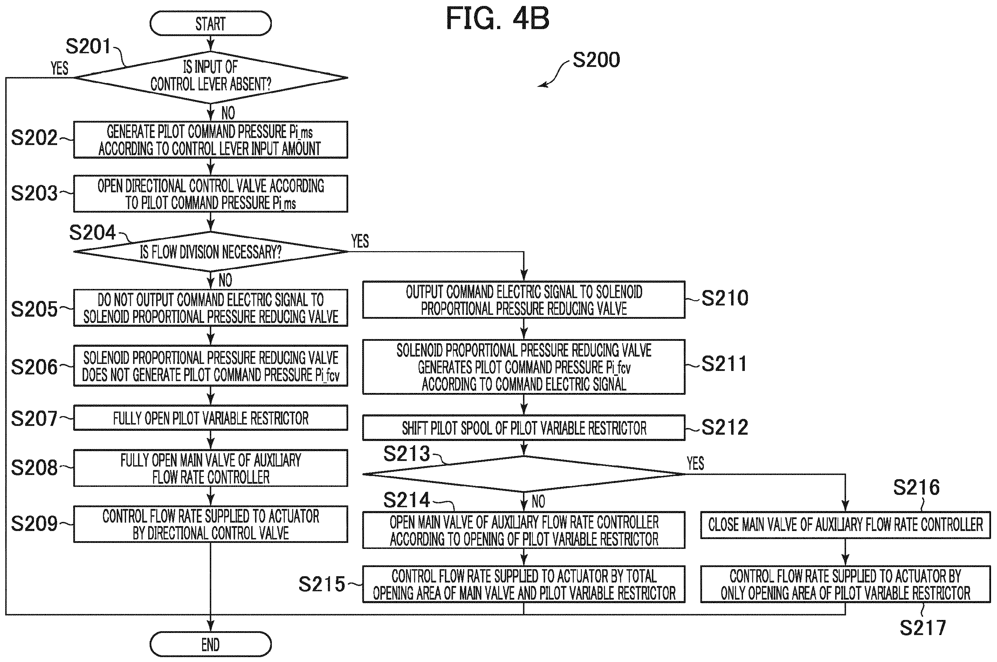

FIG. 4B is a flowchart depicting details of step S200 (control disabling processing). The processing depicted in FIG. 4B is performed for all of the auxiliary flow rate controllers. However, in the following, description will be made of only a part related to the auxiliary flow rate controller 24.

The controller 82 first determines whether or not input of the control lever 81a is absent (step S201).

When the controller 82 determines in step S201 that input of the control lever 81a is absent (YES), the controller 82 ends the control disabling processing (step S200).

When the controller 82 determines in step S201 that there is input of the control lever 81a (NO), the controller 82 generates a pilot command pressure Pi_ms (PiBM2U and PiBM2D) corresponding to a control lever input amount by the solenoid proportional pressure reducing valves 83b and 83c of the solenoid valve unit 83 (step S202), and opens the directional control valve 10 according to the pilot command pressure Pi_ms (step S203).

Following step S203, the controller 82 determines whether or not flow division for a plurality of actuators is necessary (that is, whether or not a combined operation on a plurality of actuators connected to the same delivery line is input) (step S204).

The controller 82 does not output, when determining in step S204 that the flow division is not necessary (NO), a command electric signal to the solenoid proportional pressure reducing valve 35 (step S205), the solenoid proportional pressure reducing valve 35 does not generate a pilot command pressure Pi_fcv (step S206), and the controller 82 fully opens the pilot variable restrictor 32 (step S207), fully opens the main valve 31 of the auxiliary flow rate controller 24 accordingly (step S208), controls, by the directional control valve 10, the flow rate supplied to the actuator 204a (step S209), and then ends the control disabling processing (step S200).

The controller 82 outputs, when determining in step S204 that the flow division is necessary (YES), a command electric signal to the solenoid proportional pressure reducing valve 35 (step S210), makes the solenoid proportional pressure reducing valve 35 generate the pilot command pressure Pi_fcv according to the command electric signal (step S211), and shifts a pilot spool 112 of the pilot variable restrictor 32 according to the pilot command pressure Pi_fcv from the solenoid proportional pressure reducing valve 35 (step S212).

Following step S212, the controller 82 determines whether or not the pilot command pressure Pi_fcv is higher than a threshold value S to be described later (step S213).

When the controller 82 determines in step S213 that the pilot command pressure Pi_fcv is equal to or lower than the threshold value S (NO), the controller 82 opens the main valve 31 of the auxiliary flow rate controller 24 according to opening of the pilot variable restrictor 32 (step S214), controls, by a total opening area of the main valve 31 and the pilot variable restrictor 32, the flow rate supplied to the actuator 204a (step S215), and then ends the control disabling processing (step S200).

When the controller 82 determines in step S213 that the pilot command pressure Pi_fcv is higher than the threshold value S (YES), the controller 82 allows the main valve 31 of the auxiliary flow rate controller 24 to close (step S216), controls, by only the opening area of the pilot variable restrictor 32, the flow rate supplied to the actuator 204a (step S217), and then ends the control disabling processing (step S200).

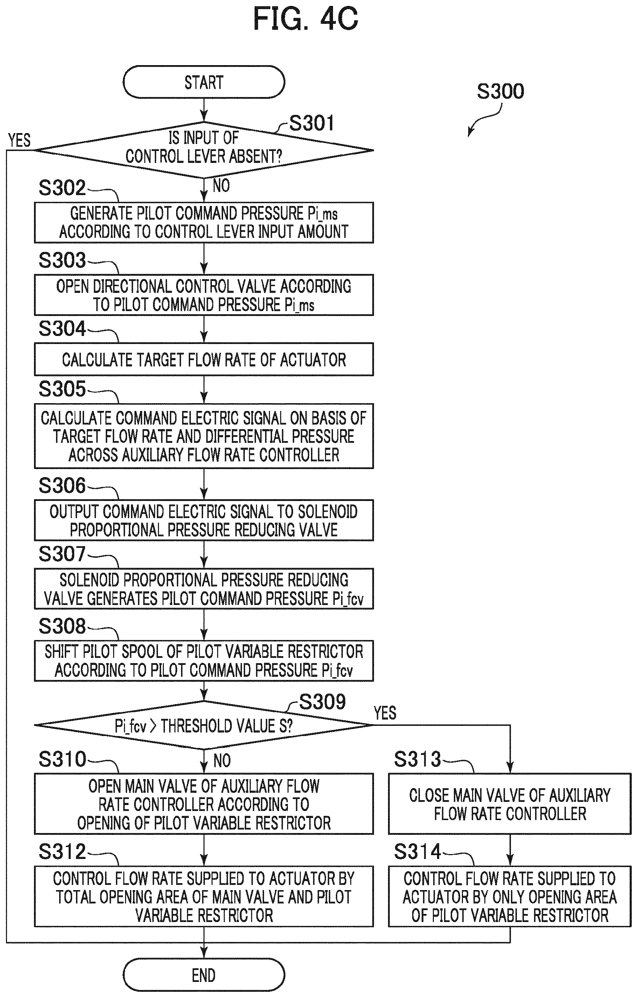

FIG. 4C is a flowchart depicting details of step S300 (control enabling processing). The processing depicted in FIG. 4B is performed for all of the auxiliary flow rate controllers. However, in the following, description will be made of only a part related to the auxiliary flow rate controller 24.

The controller 82 first determines whether or not input of the control lever 81a is absent (step S301).

When the controller 82 determines in step S301 that input of the control lever 81a is absent (YES), the controller 82 ends the control disabling processing (step S300).

When the controller 82 determines in step S301 that there is input of the control lever 81a (NO), the controller 82 generates a pilot command pressure Pi_ms (PiBm2U and PiBm2D) corresponding to a control lever input amount by the solenoid proportional pressure reducing valves 83b and 83c of the solenoid valve unit 83 (step S302), and opens the directional control valve 10 according to the pilot command pressure Pi_ms (step S303).

Following step S303, the target flow rate computing section 82e of the controller 82 calculates the target flow rate of the actuator 204a (step S304), the command electric signal computing section 82f of the controller 82 calculates a command electric signal on the basis of the target flow rate and a differential pressure across the auxiliary flow rate controller 24 (step S305), and then the output section 82g of the controller 82 outputs the command electric signal to the solenoid proportional pressure reducing valve 35 (step S306).

Following step S306, the solenoid proportional pressure reducing valve 35 generates the pilot command pressure Pi_fcv (step S307), and the pilot spool of the pilot variable restrictor 32 is shifted according to the command pressure Pi_fcv from the solenoid proportional pressure reducing valve 35 (step S308).

Following step S308, the controller 82 determines whether or not the pilot command pressure Pi_fcv is higher than the threshold value S (step S309).

When the controller 82 determines in step S309 that the pilot command pressure Pi_fcv is equal to or lower than the threshold value S (NO), the controller 82 opens the main valve 31 of the auxiliary flow rate controller 24 according to opening of the pilot variable restrictor 32 (step S310), controls, by a total opening area of the main valve 31 and the pilot variable restrictor 32, the flow rate supplied to the actuator 204a (step S310), and then ends the control enabling processing (step S300).

When the controller 82 determines in step S309 that the pilot command pressure Pi_fcv is higher than the threshold value S (YES), the controller 82 allows the main valve 31 of the auxiliary flow rate controller 24 to close (step S313), controls, by only the opening area of the pilot variable restrictor 32, the flow rate supplied to the actuator 204a (step S314), and then ends the control enabling processing (step S300).

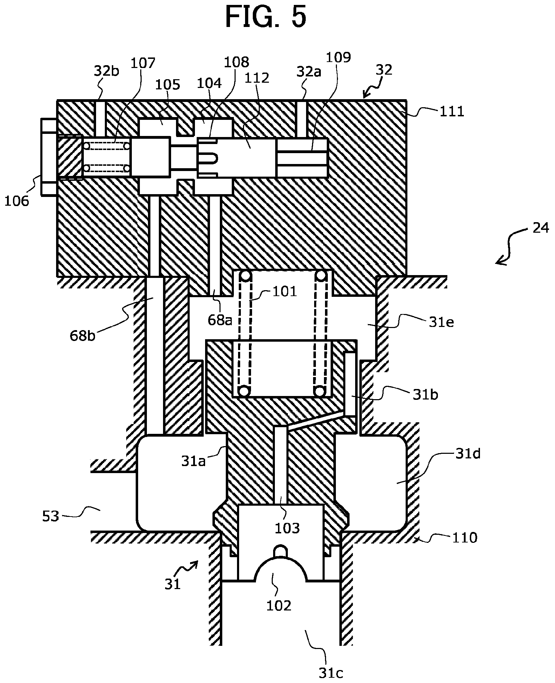

FIG. 5 is a sectional view of the auxiliary flow rate controller 24 in the first embodiment. Incidentally, the other auxiliary flow rate controllers each have a configuration similar to this as well.

The valve body 31a of the seat type main valve 31 is slidably installed in a housing 110. The first pressure chamber 31c located on an upstream side of the valve body 31a and the second pressure chamber 31d located on a downstream side thereof communicate with each other via an auxiliary variable restrictor formed between the housing 110 and the valve body 31a. The opening characteristic of this auxiliary variable restrictor is determined by the shape of a notch 102 formed in the valve body 31a. The valve body 31a is seated in the housing 110 by a spring 101 installed in the third pressure chamber 31e. The first pressure chamber 31c and the third pressure chamber 31e communicate with each other via a hydraulic fluid line 103 formed within the valve body 31a. The control variable restrictor 31b is formed between an exit on the third pressure chamber 31e side of the hydraulic fluid line 103 and a housing 111.

The pilot variable restrictor 32 is attached in such a manner as to face an end portion of the housing 110 in which the valve body 31a is installed. The pilot variable restrictor 32 includes the housing 111, the pilot spool 112, a spring 107, and a plug 106. The spring 107 that presses the pilot spool 112 is installed on one end portion side of the pilot spool 112. Another end portion of the pilot spool 112 is provided with a rod 109 that maintains the position of the pilot spool 112 by being in contact with the housing 111.

An oil chamber 104 and an oil chamber 105 are formed between the pilot spool 112 and the housing 111. The oil chamber 104 and the oil chamber 105 communicate with each other by a restrictor formed between the pilot spool 112 and the housing 111. The oil chamber 104 and the third pressure chamber 31e communicate with each other via the hydraulic fluid line 68a. The oil chamber 105 and the second pressure chamber 31d communicate with each other via the hydraulic fluid line 68b. The opening characteristic of this restrictor portion is determined by the shape of notches 108 formed in the pilot spool 112.

Incidentally, various shapes and combinations thereof other than the illustrated shapes are also used for the notch 102, the control variable restrictor 31b, and the notch 108 in order to obtain opening characteristics desired by a designer.

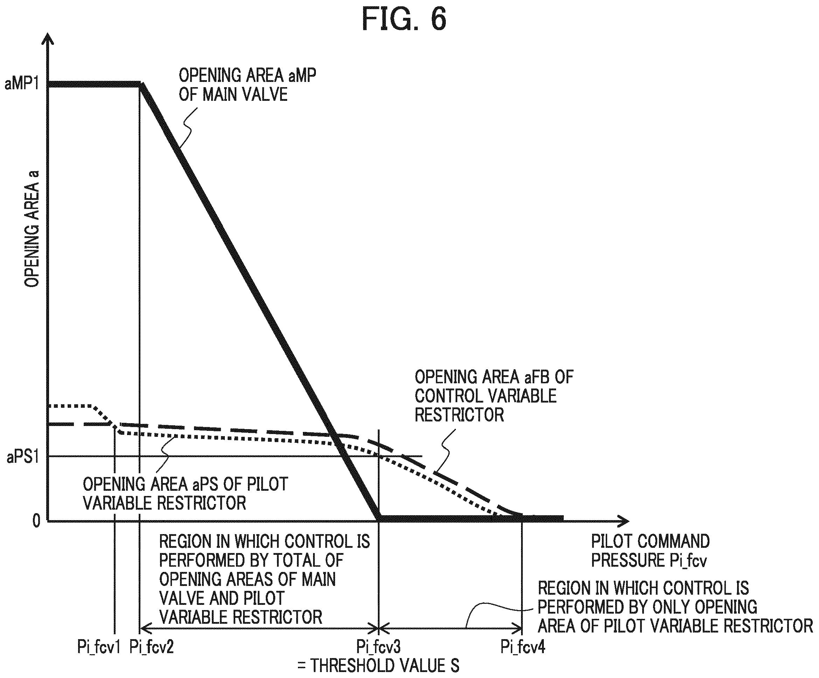

FIG. 6 is a diagram of opening areas of the auxiliary flow rate controller 24 in the first embodiment. FIG. 6 depicts changes in the respective opening areas of the pilot variable restrictor 32, the control variable restrictor 31b, and the main valve 31 with respect to the pilot command pressure Pi_fcv. Incidentally, the other auxiliary flow rate controllers each have a configuration similar to this as well.

The opening area aPS of the pilot variable restrictor 32 and the opening area aFB of the control variable restrictor 31b have an opening control region in which the pilot command pressure Pi_fcv is from Pi_fcv1 to Pi_fcv4. On the other hand, the opening area aMP of the main valve 31 has an opening control region in which the pilot command pressure Pi_fcv is from Pi_fcv2 (> Pi_fcv1) to Pi_fcv3 (< Pi_fcv4). A maximum opening area aMP1 of the main valve 31 is set sufficiently large with respect to the opening area aPS of the pilot variable restrictor 32 and the opening area aFB of the control variable restrictor 31b.

When the pilot command pressure Pi_fcv is in a range from Pi_fcv2 to Pi_fcv3, the opening amount of the auxiliary flow rate controller 24 is equal to a sum of the opening area aMP of the main valve 31 and the opening area aFB of the pilot variable restrictor 32. On the other hand, when the pilot command pressure Pi_fcv is in a range from Pi_fcv3 to Pi_fcv4, the opening area aMP of the main valve 31 is zero, and therefore the opening amount of the auxiliary flow rate controller 24 is equal to the opening area aFB of the pilot variable restrictor 32. Thus, with respect to the pilot command pressure Pi_fcv, the auxiliary flow rate controller 24 has a region in which the opening amount is controlled by a sum of the opening area aMP of the main valve 31 and the opening area aPS of the pilot variable restrictor 32 and a region in which the opening amount is controlled by only the opening area aPS of the pilot variable restrictor 32. Switching between these regions is performed with the predetermined pilot command pressure Pi_fcv3 (threshold value S) as a boundary.

(2) Operation

In the hydraulic drive system 400 in the first embodiment thus configured, operation and control as described in the following can be performed. Incidentally, in order to simplify the following description, the description will be made of operation performed in a state in which the region limiting control of the hydraulic excavator 300 is enabled by inputting a signal to enable the region limiting control of the hydraulic excavator 300 from the control enabling switch 84 to the controller 82 and in a case where the second boom directional control valve 10 and the first arm directional control valve 11 arranged in parallel with respect to the second hydraulic pump 2 need flow division.

The controller 82 makes, when a signal to enable the region limiting control of the hydraulic excavator 300 is sent from the control enabling switch 84 to the controller 82, the solenoid proportional pressure reducing valves 83b to 83e of the solenoid valve unit 83 generate the pilot command pressures Pi_ms of the directional control valves 10 and 11 according to lever operation amounts input from the control levers 81a and 81b, and makes the pilot command pressures Pi_ms act on the pilot ports of the directional control valves 10 and 11.

Consequently, the actuators 204a and 205a can be driven under control of the controller 82, and the region limiting control of the hydraulic excavator 300 is performed.

The controller 82 computes the target flow rates of the actuators on the basis of operation amounts of the respective actuators and the operation state of the hydraulic excavator 300, the operation state being obtained from each stroke sensor, and outputs command electric signals generated on the basis of the target flow rates and the pressures obtained from the pressure sensors to the solenoid proportional pressure reducing valves 35 and 36. The solenoid proportional pressure reducing valves 35 and 36 generate pilot command pressures Pi_fcv according to the command electric signals from the controller 82, and make the pilot command pressures Pi_fcv act on the pilot ports 32a and 34a of the pilot variable restrictors 32 and 34 of the auxiliary flow rate controllers 24 and 25.

The pilot variable restrictors 32 and 34 change the opening area aPS by shifting the pilot spool 112 according to the pilot command pressure Pi_fcv. Here, when the pilot command pressure Pi_fcv ≥ Pi_fcv1, the opening area aFB of the control variable restrictor 31b or 33b also changes according to the change in the opening area aPS of the pilot variable restrictor 32 or 34. At this time, relation between the opening area aFB of the control variable restrictor 31b or 33b and the opening area aPS of the pilot variable restrictor 32 or 34 is as follows. [Math. 1]

$$aFB = K \times aPS \quad \dots \quad (1)$$

* K is a coefficient determined by the shape of the main valve.

The opening area aFB of the control variable restrictor 31b or 33b changes according to a shift of the valve body 31a or 33a. Thus, when the opening area aPS of the pilot variable restrictor 32 or 34 changes, the valve body 31a or 33a is shifted, and a ratio between the opening area aFB of the control variable restrictor 31b or 33b and the opening area aPS of the pilot variable restrictor 32 or 34 is held constant. At this time, the opening area aMP of the main valve 31 or 33 also changes according to the shift of the valve body 31a or 33a. Thus, the opening area aMP of the main valve 31 or 33 changes according to the pilot command pressure Pi_fcv when the pilot command pressure Pi_fcv ≥ Pi_fcv2.

Here, when the pilot command pressure Pi_fcv is Pi_fcv2 ≤ Pi_fcv < Pi_fcv3, the opening amount of the auxiliary flow rate controller 24 or 25 coincides with a sum of the opening area aMP of the main valve 31 or 33 and the opening area aPS of the pilot variable restrictor 32 or 34. That is, the opening amount of the auxiliary flow rate controller 24 or 25 is controlled by a total opening area of the pilot variable restrictor 32 or 34 and the main valve 31 or 33.

When the pilot command pressure Pi_fcv is Pi_fcv3 ≤ Pi_fcv < Pi_fcv4, the opening area aMP of the main valve 31 or 33 is zero. Thus, the opening amount of the auxiliary flow rate controller 24 or 25 coincides with the opening area aPS of the pilot variable restrictor 32 or 34. That is, the opening amount of the auxiliary flow rate controller 24 or 25 is controlled by only the opening area aPS of the pilot variable restrictor 32 or 34.

While the operation of the auxiliary flow rate controllers 24 and 25 has been described above, the operation of the other auxiliary flow rate controllers is also similar.

(3) Effects

In the first embodiment, the work machine 300 includes the machine body 202; the work device 203 attached to the machine body 202; the plurality of actuators 204a, 205a, 206a, and 211 that drive the machine body 202 or the work device 203; the hydraulic pumps 1 to 3; the plurality of directional control valves 6 to 16 that are connected in parallel to the delivery lines 40, 50, and 60 of the hydraulic pumps 1 to 3, and adjust flows of hydraulic fluid supplied from the hydraulic pumps 1 to 3 to the plurality of actuators 204a, 205a, 206a, and 211; the control levers 81a and 81b for giving an instruction for operation of the plurality of actuators 204a, 205a, 206a, and 211; the pilot pump 4; the solenoid valve unit 83 that reduces a pressure of hydraulic fluid supplied from the pilot pump 4, and outputs the reduced pressure as operation pressures of the plurality of directional control valves 6 to 16; the controller 82 that outputs a command to the solenoid valve unit 83 according to operation instruction amounts from the control levers 81a and 81b; and the auxiliary flow rate controllers 21 to 29 that are respectively arranged upstream of the plurality of directional control valves 6 to 16, and limit flow rates of hydraulic fluid supplied from the hydraulic pumps 1 to 3 to the plurality of directional control valves 6 to 16. The auxiliary flow rate controllers 21 to 29 each include the seat type main valve 31 or 33, the control variable restrictor 31b or 33b that changes an opening area according to an amount of movement of the valve body 31a or 33a of the main valve 31 or 33, the pilot line 68 or 69 that connects a downstream side of the main valve 31 or 33 and a downstream side of the control variable restrictor 31b or 33b to each other and that decides the amount of movement of the valve body 31a or 33a according to a passing flow rate, and the spool type pilot variable restrictor 32 or 34 that is disposed on the pilot line 68 or 69 and that changes an opening area according to a command from the controller 82. The auxiliary flow rate controllers 21 to 29 are each configured such that the opening area aMP of the main valve 31 or 33 changes between the maximum opening area aMP1 and zero according to the opening area aPS of the pilot variable restrictor 32 or 34 when the opening area aPS of the pilot variable restrictor 32 or 34 is equal to or more than a predetermined opening area aPS1 and that the opening area aMP of the main valve 31 or 33 is zero irrespective of the opening area aPS of the pilot variable restrictor 32 or 34 when the opening area aPS of the pilot variable restrictor 32 or 34 is less than the predetermined opening area aPS1.

According to the first embodiment configured as described above, when a region limiting control function is enabled, the auxiliary flow rate controllers 21 to 29 can supply target flow rates commanded by the controller 82 to the actuators without depending on load variations of the actuators.

In addition, in an operation performed when the demanded flow rate of an actuator is large or when a pressure difference between the hydraulic pump and the actuator is small, that is, in an operation in which the opening amount of the auxiliary flow rate controller 21 to 29 needs to be increased, the opening amount of the auxiliary flow rate controller 21 to 29 can be adjusted by the total opening area of the pilot variable restrictor 32 or 34 and the main valve 31 or 33 by opening the main valve 31 or 33 together with the pilot variable restrictor 32 or 34.

On the other hand, in an operation performed when the pressure difference between the hydraulic pump and the actuator is large and the demanded flow rate of the actuator is small, that is, in an operation in which the opening amount of the auxiliary flow rate controller 21 to 29 needs to be decreased, the opening amount of the auxiliary flow rate controller 21 to 29 can be adjusted by only the opening area aPS of the pilot variable restrictor 32 or 34 by closing the seat type main valve 31 or 33 and opening only the spool type pilot variable restrictor 32 or 34. It is thereby possible to adjust with high accuracy the flow rate supplied to the actuator, and therefore improve accuracy of control of the actuator.

[Second Embodiment]

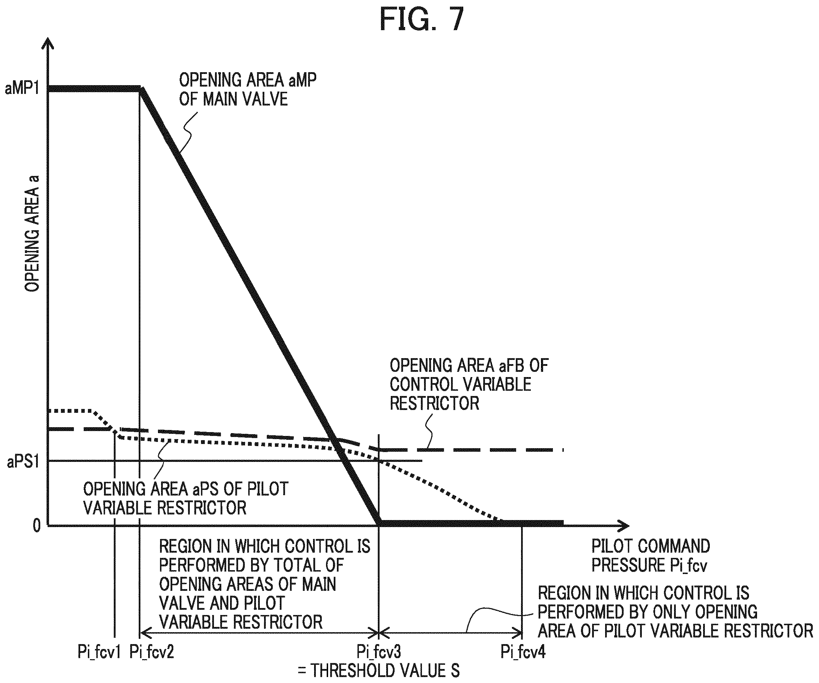

FIG. 7 is a diagram of opening areas of auxiliary flow rate controllers 21 to 29 in a second embodiment of the present invention.

(1) Configuration

A configuration of a hydraulic drive system in the second embodiment is substantially similar to that of the hydraulic drive system 400 in the first embodiment (depicted in FIG. 2A and FIG. 2B), but is different from that of the hydraulic drive system 400 in the first embodiment in the following respects.

In a region from the pilot command pressure Pi_fcv3 to Pi_fcv4, in which the opening amount is controlled by only the opening area aPS of the pilot variable restrictor 32 or 34, the opening area aFB of the control variable restrictor 31b is constant. At this time, relation between the opening area aFB of the control variable restrictor 31b or 33b and the opening area aPS of the pilot variable restrictor 32 or 34 is as follows.

[Math. 2]

$$aFB = K \times aPS \ ... \ (2)$$

* K is a coefficient determined by the shape of the main valve

*

$$Pi\_fcv2 \leq Pi\_fcv < Pi\_fcv3$$

[Math. 3]

$$aFB > K \times aPS \ ... \ (3)$$

*

$$Pi\_fcv3 \leq Pi\_fcv < Pi\_fcv4$$

## (2) Operation

Operation of the hydraulic drive system in the second embodiment is substantially similar to the operation of the hydraulic drive system 400 in the first embodiment, but is different from the operation of the hydraulic drive system 400 in the first embodiment in the following respects.

When the pilot command pressure Pi_fcv is Pi_fcv3 ≤ Pi_fcv < Pi_fcv4, the opening amount of the auxiliary flow rate controller 24 or 25 is controlled by only the opening area aPS of the pilot variable restrictor 32 or 34. At this time, the opening area aFB of the control variable restrictor 31b or 33b assumes a constant value with respect to the pilot command pressure Pi_fcv, and is larger than K times the opening area aPS of the pilot variable restrictor 32 or 34.

## (3) Effects

The auxiliary flow rate controllers 24 and 25 in the second embodiment are each configured such that the opening area aFB of the control variable restrictor 31b or 33b is a predetermined coefficient (K) times the opening area aPS of the pilot variable restrictor 32 or 34 when the opening area aPS of the pilot variable restrictor 32 or 34 is equal to or more than the predetermined opening area aPS1 (when the pilot command pressure Pi_fcv is equal to or lower than the threshold value S) and that the opening area aFB of the control variable restrictor 31b or 33b is larger than the predetermined coefficient (K) times the opening area aPS of the pilot variable restrictor 32 or 34 when the opening area aPS of the pilot variable restrictor 32 or 34 is less than the predetermined opening area aPS1.

The second embodiment configured as described above provides the following effects in addition to effects similar to those of the first embodiment.

When the opening amount of the auxiliary flow rate controller 24 or 25 is controlled by only the pilot variable restrictor 32 or 34, the opening area aFB of the control variable restrictor 31b or 33b located upstream of the pilot variable restrictor 32 or 34 is larger than K times the opening area aPS of the pilot variable restrictor 32 or 34. It is therefore possible to reduce an undesired pressure loss and improve pressure responsiveness on the upstream side of the pilot variable restrictor 32 or 34 (third pressure chamber 31e or 33e). Thus, flow rate control can be performed with high responsiveness to pressure variations in actuator load pressure, pump pressure, or the like.

## [Third Embodiment]

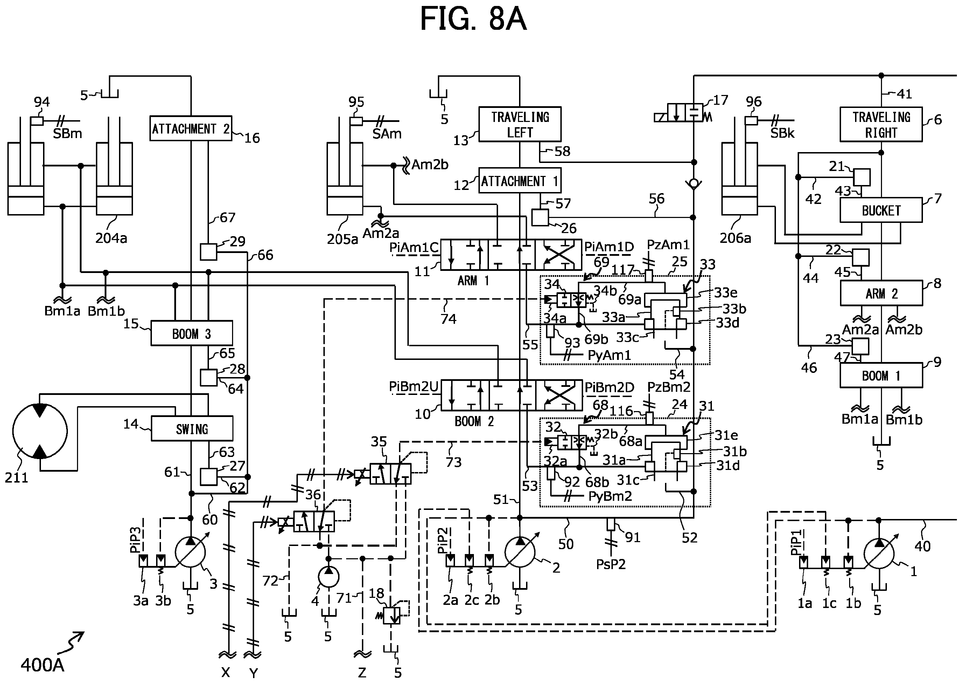

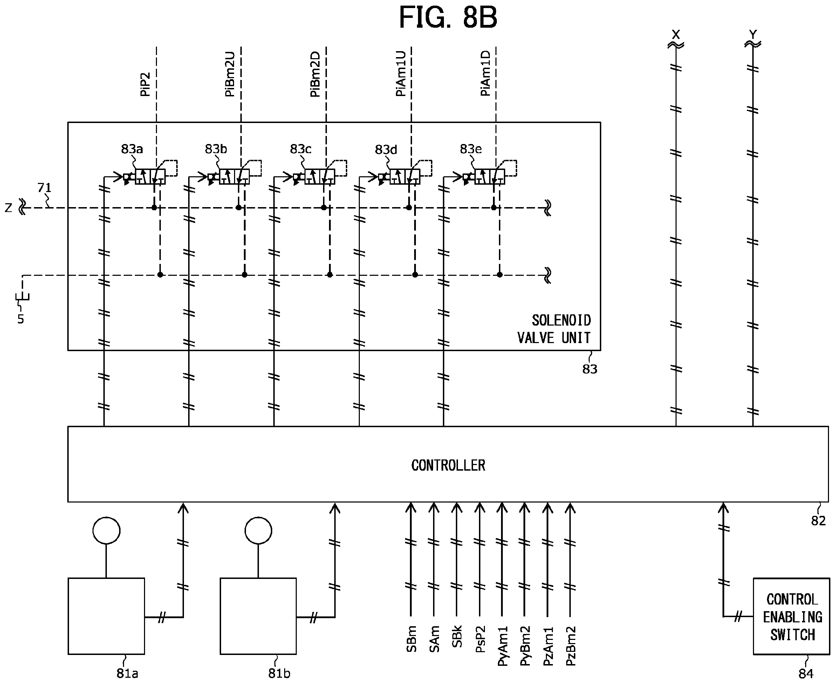

FIG. 8A and FIG. 8B are circuit diagrams of a hydraulic drive system in a third embodiment of the present invention.

## (1) Configuration

As depicted in FIG. 8A and FIG. 8B, a configuration of a hydraulic drive system 400A in the third embodiment is substantially similar to that of the hydraulic drive system 400 in the first embodiment (depicted in FIG. 2A and FIG. 2B), but is different from that of the hydraulic drive system 400 in the first embodiment in the following respects.

A pressure sensor 116 is provided to the hydraulic fluid line 68a that makes the third pressure chamber 31e and the pilot variable restrictor 32 of the auxiliary flow rate controller 24 communicate with each other. A pressure sensor 117 is provided to the hydraulic fluid line 69a that makes the third pressure chamber 33e and the pilot variable restrictor 34 of the auxiliary flow rate controller 25 communicate with each other. Output signals of the pressure sensors 116 and 117 are input to the controller 82. Incidentally, though partly not depicted for simplification of the description, the auxiliary flow rate controllers 21 to 29 and peripheral apparatuses, piping, and wiring all have same configurations.

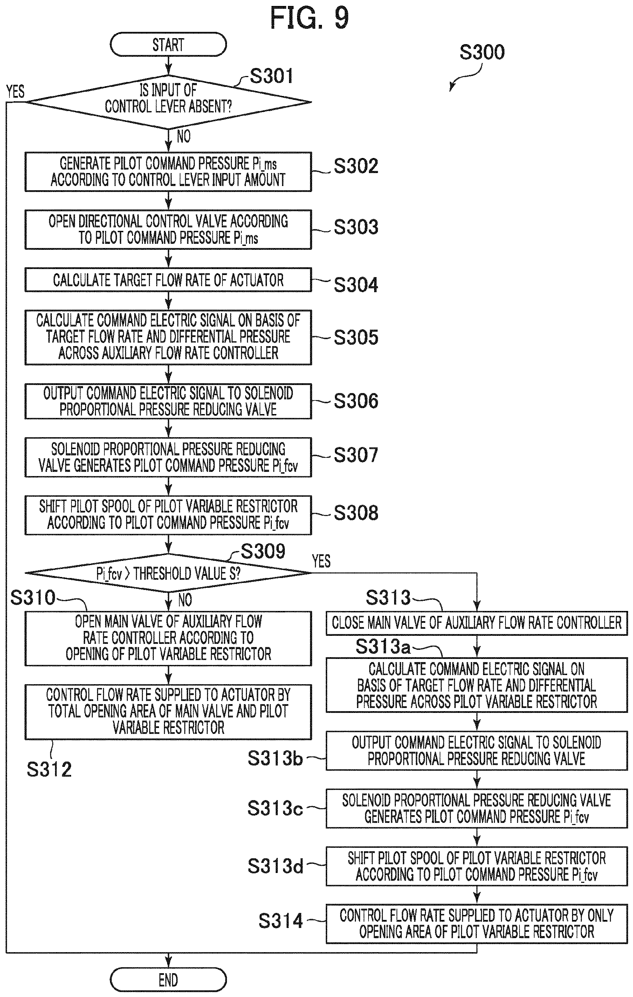

FIG. 9 is a flowchart depicting details of step S300 (control enabling processing) in the computation processing of the controller 82 in the third embodiment. In FIG. 9, a difference from the first embodiment (depicted in FIG. 4C) is an addition of steps S313a to S313d between step S313 and step S314. In the following, steps S313a to S313d will be described.

Following step S313, the command electric signal computing section 82f of the controller 82 calculates a command electric signal on the basis of the target flow rate of the actuator 204a and a differential pressure across the pilot variable restrictor 32 or 34 (S313a), and the output section 82g of the controller 82 outputs the command electric signal to the solenoid proportional pressure reducing valve 35 or 36 (S313b).

Following step S313b, the solenoid proportional pressure reducing valve 35 or 36 generates a pilot command pressure Pi_fcv corresponding to the command electric signal (S315A), and shifts the pilot spool 112 of the pilot variable restrictor 32 or 34 according to the pilot command pressure Pi_fcv (S313d). The processing then proceeds to step S318.

Incidentally, while only processing with regard to the auxiliary flow rate controllers 24 and 25 has been described in the foregoing, similar processing is also performed with regard to the other auxiliary flow rate controllers.

(2) Operation

Operation of the hydraulic drive system 400A in the third embodiment is substantially similar to the operation of the hydraulic drive system 400 in the first embodiment, but is different from the operation of the hydraulic drive system 400 in the first embodiment in the following respects.

When the pilot command pressure Pi_fcv is Pi_fcv3 ≤ Pi_fcv < Pi_fcv4, the opening amount of the auxiliary flow rate controller 24 or 25 is controlled by only the opening area aPS of the pilot variable restrictor 32 or 34. At this time, the controller 82 calculates the command electric signal on the basis of the target flow rate and output values from the pressure sensors 92 or 93 and 116 or 117, and outputs the command electric signal to the solenoid proportional pressure reducing valve 35 or 36.

(3) Effects

The work machine 300 in the third embodiment includes the pressure sensors 92, 93, 116, and 117 that detect differential pressures across the pilot variable restrictors 32 and 34. The controller 82, when the opening area aPS of the pilot variable restrictor 32 or 34 is less than the predetermined opening area aPS1 (when the pilot command pressure Pi_fcv exceeds the threshold value S), calculates a command (pilot command pressure Pi_fcv) for the pilot variable restrictor 32 or 34 on the basis of the across pressure detected by the pressure sensors 92 or 93 and 116 or 117 such that the passing flow rate of the pilot variable restrictor 32 or 34 coincides with the target flow rate of the auxiliary flow rate controller 24 or 25 (target flow rate of the actuator).

The third embodiment configured as described above provides the following effects in addition to effects similar to those of the first embodiment.

When the opening amount of the auxiliary flow rate controller 24 or 25 is controlled by only the pilot variable restrictor 32 or 34, the command electric signal is calculated and output on the basis of the differential pressure across the pilot variable restrictor 32 or 34. Thus, the passing flow rate of the auxiliary flow rate controller 24 or 25 can be controlled more accurately than when the differential pressure across the auxiliary flow rate controller 24 or 25 is used. It is thereby possible to further improve the accuracy of control of the actuators.

The embodiments of the present invention have been described above in detail. However, the present invention is not limited to the foregoing embodiments, but includes various modifications. For example, the foregoing embodiments have been described in detail in order to describe the present invention in an easily understandable manner, and are not necessarily limited to the embodiments including all of the described configurations. In addition, it is possible to add a part of a configuration of a certain embodiment to a configuration of another embodiment, and it is possible to omit a part of a configuration of a certain embodiment or replace a part of a configuration of a certain embodiment with a part of another embodiment.

Description of Reference Characters

1: First hydraulic pump
1a: Flow rate control command pressure port (regulator)
1b: First hydraulic pump self-pressure port (regulator)
1c: Second hydraulic pump self-pressure port (regulator)
2: Second hydraulic pump
2a: Flow rate control command pressure port (regulator)
2b: First hydraulic pump self-pressure port (regulator)
2c: Second hydraulic pump self-pressure port (regulator)
3: Third hydraulic pump
3a: Flow rate control command pressure port (regulator)
3b: Third hydraulic pump self-pressure port (regulator)
4: Pilot pump
5: Hydraulic operating fluid tank
6: Right travelling directional control valve
7: Bucket directional control valve
8: Second arm directional control valve
9: First boom directional control valve
10: Second boom directional control valve
11: First arm directional control valve
12: First attachment directional control valve
13: Left travelling directional control valve
14: Swing directional control valve
15: Third boom directional control valve
16: Second attachment directional control valve
17: Confluence valve
18: Pilot relief valve
21 to 29: Auxiliary flow rate controller
31: Main valve
31a: Valve body
31b: Control variable restrictor
31c: First pressure chamber
31d: Second pressure chamber
31e: Third pressure chamber
32: Pilot variable restrictor
32a: Pilot port
33: Main valve
33a: Valve body
33b: Control variable restrictor
33c: First pressure chamber
33d: Second pressure chamber
33e: Third pressure chamber
34: Pilot variable restrictor

34a: Pilot port

35, 36: Solenoid proportional pressure reducing valve

40: Delivery line

41: Center bypass line

42 to 47: Hydraulic fluid line

50: Delivery line

51: Center bypass line

52 to 58: Hydraulic fluid line

60: Delivery line

61: Center bypass line

62 to 67: Hydraulic fluid line

68: Pilot line

68a, 68b: Hydraulic fluid line

69: Pilot line

69a, 69b: Hydraulic fluid line

71: Hydraulic fluid line

81a, 81b: Control lever

82: Controller

82a: Input section

82b: Control enablement determining section

82c: Machine body posture computing section

82d: Demanded flow rate computing section

82e: Target flow rate computing section

82f: Command electric signal computing section

82g: Output section

83: Solenoid valve unit

83a to 83e: Solenoid proportional pressure reducing valve

84: Control enabling switch

91 to 93: Pressure sensor

94 to 96: Stroke sensor

101: Spring

102: Notch

103: Hydraulic fluid line

104: Oil chamber

105: Oil chamber

106: Plug

107: Spring

108: Notch

109: Rod

110: Housing

111: Housing

112: Pilot spool

116, 117: Pressure sensor

201: Track structure

202: Swing structure (machine body)

203: Work device

204: Boom

204a: Boom cylinder (actuator)

205: Arm

205a: Arm cylinder (actuator)

206: Bucket

206a: Bucket cylinder (actuator)

207: Cab

208: Machine room

209: Counterweight

210: Control valve

211: Swing motor (actuator)

300: Hydraulic excavator (work machine)

400, 400A: Hydraulic drive system

## Claims

1. A work machine comprising:

a machine body (202);

a work device (203) attached to the machine body (202);

a plurality of actuators (204a, 205a, 206a, 211) that drive the machine body (202) or the work device (203);

a hydraulic pump (1 to 3);

a plurality of directional control valves (6 to 16) that are connected in parallel to a delivery line of the hydraulic pump (1 to 3) and adjust flows of hydraulic fluid supplied from the hydraulic pump (1 to 3) to the plurality of actuators (204a, 205a, 206a, 211);

a control lever (81a, 81b) for giving an instruction for operation of the plurality of actuators (204a, 205a, 206a, 211);

a pilot pump (4); a controller (82); and

auxiliary flow rate controllers (21 to 29) that are respectively arranged upstream of the plurality of directional control valves (6 to 16) and limit flow rates of hydraulic fluid supplied from the hydraulic pump to the plurality of directional control valves (6 to 16); wherein

the auxiliary flow rate controllers (21 to 29) each include

a seat type main valve (31, 33),

a control variable restrictor (31b, 33b) that changes an opening area according to an amount of movement of a valve body (31a, 33a) of the main valve (31, 33),

a pilot line (68, 69) that connects a downstream side of the main valve (31, 33) and a downstream side of the control variable restrictor (31b, 33b) to each other and decides the amount of movement of the valve body (31a, 33a) according to a passing flow rate, and

a spool type pilot variable restrictor (32, 34) that is disposed on the pilot line (68, 69) and changes an opening area according to a command from the controller (82);

**characterized in that**

the work machine further comprises a solenoid valve unit (83) that reduces a pressure of hydraulic fluid supplied from the pilot pump (4), and outputs the reduced pressure as operation pressures of the plurality of directional control valves

(6 to 16),

the controller (82) is configured to output a command to the solenoid valve unit (83) according to an operation instruction amount from the control lever (81a, 81b); and

the auxiliary flow rate controllers (21 to 29) are each configured such that

an opening area of the main valve (31, 33) changes between a maximum opening amount and zero according to the opening area of the pilot variable restrictor (32, 34) in a case where the opening area of the pilot variable restrictor (32, 34) is equal to or more than a predetermined opening area and

the opening area of the main valve (31, 33) is zero irrespective of the opening area of the pilot variable restrictor (32, 34) in a case where the opening area of the pilot variable restrictor (32, 34) is less than the predetermined opening area.

2. The work machine according to claim 1, wherein the auxiliary flow rate controllers (21 to 29) are each configured such that

the opening area of the control variable restrictor (31b, 33b) is a predetermined coefficient times the opening area of the pilot variable restrictor (32, 34) in a case where the opening area of the pilot variable restrictor (32, 34) is equal to or more than the predetermined opening area and the opening area of the control variable restrictor (31b, 33b) is larger than the predetermined coefficient times the opening area of the pilot variable restrictor (32, 34) in a case where the opening area of the pilot variable restrictor (32, 34) is less than the predetermined opening area.

3. The work machine according to claim 1, wherein

the work machine includes a pressure sensor (92, 93, 116, 117) that detects a differential pressure across the pilot variable restrictor (32, 34), and

the controller (82) is configured to, in a case where the opening area of the pilot variable restrictor (32, 34) is less than the predetermined opening area, calculate the command for the pilot variable restrictor (32, 34) on a basis of the across differential pressure detected by the pressure sensor (92, 93, 116, 117) such that a passing flow rate of the pilot variable restrictor (32, 34) coincides with a target passing flow rate of the auxiliary flow rate controller (21 to 29).

**Patentansprüche**

1. Arbeitsmaschine, umfassend:

einen Maschinenkörper (202);

eine Arbeitsvorrichtung (203), die an dem Maschinenkörper (202) angebracht ist;

eine Vielzahl von Aktoren (204a, 205a, 206a, 211), die den Maschinenkörper (202) oder die Arbeitsvorrichtung (203) antreiben;

eine Hydraulikpumpe (1 bis 3);

eine Vielzahl von Wegeventilen (6 bis 16), die parallel zu einer Förderleitung der Hydraulikpumpe (1 bis 3) geschaltet sind und Ströme von Hydraulikfluid, das von der Hydraulikpumpe (1 bis 3) der Vielzahl von Aktoren (204a, 205a, 206a, 211) zugeführt wird, einstellen;

einen Steuerhebel (81a, 81b) zum Geben einer Anweisung für den Betrieb der Vielzahl von Aktoren (204a, 205a, 206a, 211);

eine Pilotpumpe (4); einen Controller (82); und Hilfsdurchflussmengenregler (21 bis 29), die jeweils stromaufwärts der Vielzahl von Wegeventilen (6 bis 16) angeordnet sind und Durchflussmengen von Hydraulikfluid, das von der Hydraulikpumpe der Vielzahl von Wegeventilen (6 bis 16) zugeführt wird, begrenzen; wobei die Hilfsdurchflussmengenregler (21 bis 29) jeweils umfassen

ein Hauptventil vom Sitz-Typ (31, 33),

einen variablen Steuerbegrenzer (31b, 33b), der einen Öffnungsbereich gemäß einem Bewegungsbetrag eines Ventilkörpers (31a, 33a) des Hauptventils (31, 33) ändert,

eine Pilotleitung (68, 69), die eine stromabwärtige Seite des Hauptventils (31, 33) und eine stromabwärtige Seite des variablen Steuerbegrenzers (31b, 33b) miteinander verbindet und den Bewegungsbetrag des Ventilkörpers (31a, 33a) gemäß einer Durchflussmenge bestimmt, und

einen variablen Pilotbegrenzer vom Schieber-Typ (32, 34), der auf der Pilotleitung (68, 69) angeordnet ist und einen Öffnungsbereich gemäß einem Befehl von dem Controller (82) ändert;

**dadurch gekennzeichnet, dass**

die Arbeitsmaschine ferner eine Magnetventileinheit (83) umfasst, die einen Druck von Hydraulikfluid reduziert, das von der Pilotpumpe (4) zugeführt wird, und den reduzierten Druck als Betriebsdrücke der Vielzahl von Wegeventilen (6 bis 16) ausgibt,

der Controller (82) konfiguriert ist, um einen Befehl an die Magnetventileinheit (83) gemäß einem Betriebsanweisungsbetrag von dem Steuerhebel (81a, 81b) auszugeben; und die Hilfsdurchflussmengenregler (21 bis 29) jeweils so konfiguriert sind, dass

sich ein Öffnungsbereich des Hauptventils (31, 33) zwischen einem maximalen Öffnungsbetrag und null gemäß dem Öffnungsbereich des variablen Pilotbegrenzers (32, 34) in einem Fall ändert, in dem der Öffnungsbereich des variablen Pilotbegrenzers (32, 34) gleich oder größer als ein vorbestimmter Öffnungsbereich ist, und der Öffnungsbereich des Hauptventils (31, 33) unabhängig von dem Öffnungsbereich des variablen Pilotbegrenzers (32, 34) in einem Fall null ist, in dem der Öffnungsbereich des variablen Pilotbegrenzers (32, 34) kleiner als der vorbestimmte Öffnungsbereich ist.

2. Arbeitsmaschine nach Anspruch 1, wobei die Hilfsdurchflussmengenregler (21 bis 29) jeweils so konfiguriert sind, dass

der Öffnungsbereich des variablen Steuerbegrenzers (31b, 33b) ein vorbestimmter Koeffizient mal dem Öffnungsbereich des variablen Pilotbegrenzers (32, 34) in einem Fall ist, in dem der Öffnungsbereich des variablen Pilotbegrenzers (32, 34) gleich oder größer als der vorbestimmte Öffnungsbereich ist, und der Öffnungsbereich des variablen Steuerbegrenzers (31b, 33b) größer als der vorbestimmte Koeffizient mal dem Öffnungsbereich des variablen Pilotbegrenzers (32, 34) in einem Fall ist, in dem der Öffnungsbereich des variablen Pilotbegrenzers (32, 34) kleiner als der vorbestimmte Öffnungsbereich ist.

3. Arbeitsmaschine nach Anspruch 1, wobei

die Arbeitsmaschine einen Drucksensor (92, 93, 116, 117) umfasst, der einen Differenzdruck über den variablen Pilotbegrenzer (32, 34) erfasst, und der Controller (82) konfiguriert ist, um in einem Fall, in dem der Öffnungsbereich des variablen Pilotbegrenzers (32, 34) kleiner als der vorbestimmte Öffnungsbereich ist, den Befehl für den variablen Pilotbegrenzer (32, 34) auf einer Basis des Differenzdrucks zu berechnen, der von dem Drucksensor (92, 93, 116, 117) erfasst wird, so dass eine Durchflussmenge des variablen Pilotbegrenzers (32, 34) mit einer Zieldurchflussmenge des Hilfsdurchflussmengenreglers (21 bis 29) übereinstimmt.

## Revendications

1. Machine de chantier comprenant :

un corps de machine (202) ;
un dispositif de travail (203) attaché au corps de machine (202) ;
une pluralité d'actionneurs (204a, 205a, 206a, 211) qui entraînent le corps de machine (202) ou le dispositif de travail (203) ;
une pompe hydraulique (1 à 3) ;
une pluralité de vannes de commande directionnelle (6 à 16) qui sont connectées en parallèle à une ligne de distribution de la pompe hydraulique (1 à 3) et qui ajustent des écoulements d'un fluide hydraulique alimenté depuis la pompe hydraulique (1 à 3) jusqu'à la pluralité d'actionneurs (204a, 205a, 206a, 211) ;
un levier de commande (81a, 81b) destiné à donner une instruction d'actionnement de la pluralité d'actionneurs (204a, 205a, 206a, 211) ;
une pompe pilote (4) ;
un contrôleur (82) ; et
des contrôleurs auxiliaires de débit (21 à 29) qui sont respectivement agencés en amont de la pluralité de vannes de commande directionnelle (6 à 16) et qui limitent des débits d'un fluide hydraulique alimenté depuis la pompe hydraulique jusqu'à la pluralité de vannes de commande directionnelle (6 à 16) ; dans laquelle les contrôleurs auxiliaires de débit (21 à 29) incluent chacun une vanne principale du type à siège (31, 33),
une restriction variable de commande (31b, 33b) qui change une aire d'ouverture en fonction d'une amplitude de déplacement d'un corps de vanne (31a, 33a) de la vanne principale (31, 33),
une conduite pilote (68, 69) qui connecte l'un à l'autre un côté aval de la vanne principale (31, 33) et un côté aval de la restriction variable de commande (31b, 33b) et qui décide de l'amplitude de déplacement du corps de vanne (31a, 33a) en fonction d'un débit passant, et
une restriction variable pilote du type à tiroir (32, 34) qui est disposée sur la conduite pilote (68, 69) et qui change une aire d'ouverture en fonction d'un ordre provenant du contrôleur (82) ;
**caractérisée en ce que**
la machine de chantier comprend en outre une unité de vanne à solénoïde (83) qui réduit une pression d'un fluide hydraulique alimenté depuis la pompe pilote (4), et qui sort la pression réduite à titre de pressions de fonctionnement de la pluralité de vannes de commande directionnelle (6 à 16),
le contrôleur (82) est configuré pour sortir un ordre vers l'unité formant vanne à solénoïde (83) en fonction d'une amplitude d'instruction d'actionnement provenant du levier de commande (81a, 81b) ; et

les contrôleurs auxiliaires de débit (21 à 29) sont chacun configurés de telle sorte que

une aire d'ouverture de la vanne principale (31, 33) change entre une amplitude d'ouverture maximum et zéro en fonction de l'aire d'ouverture de la restriction variable pilote (32, 34) dans un cas où l'aire d'ouverture de la restriction variable pilote (32, 34) est égale ou supérieure à une aire d'ouverture prédéterminée, et

l'aire d'ouverture de la vanne principale (31, 33) est égale à zéro sans tenir compte de l'aire d'ouverture de la restriction variable pilote (32, 34) dans un cas où l'aire d'ouverture de la restriction variable pilote (32, 34) est inférieure à l'aire d'ouverture prédéterminée.

2. Machine de chantier selon la revendication 1, dans laquelle les contrôleurs auxiliaires de débit (21 à 29) sont chacun configurés de telle sorte que

l'aire d'ouverture de la restriction variable de commande (31b, 33b) est un coefficient prédéterminé multiplié par l'aire d'ouverture de la restriction variable pilote (32, 34) dans un cas où l'aire d'ouverture de la restriction variable pilote (32, 34) est égale ou supérieure à l'aire d'ouverture prédéterminée, et

l'aire d'ouverture de la restriction variable de commande (31b, 33b) est supérieure au coefficient prédéterminé multiplié par l'aire d'ouverture de la restriction variable pilote (32, 34) dans un cas où l'aire d'ouverture de la restriction variable pilote (32, 34) est inférieure à l'aire d'ouverture prédéterminée.

3. Machine de chantier selon la revendication 1, dans laquelle

la machine de chantier inclut un capteur de pression (92, 93, 116, 117) qui détecte une pression différentielle à travers la restriction variable pilote (32, 34), et

le contrôleur (82) est configuré pour, dans un cas où l'aire d'ouverture de la restriction variable pilote (32, 34) est inférieure à l'aire d'ouverture prédéterminée, calculer l'ordre pour la restriction variable pilote (32, 34) sur la base de la pression différentielle transversale détectée par le capteur de pression (92, 93, 116, 117) de telle sorte qu'un débit passant de la restriction variable pilote (32, 34) coïncide avec un débit passant cible du contrôleur auxiliaire de débit (21 à 29).

# FIG. 1

EP 4 001 519 B1

FIG. 2A

EP 4 001 519 B1

# FIG. 2B

EP 4 001 519 B1

FIG. 3

EP 4 001 519 B1

# FIG. 4A

```
                    ┌──────────────┐
                    │    START     │
                    └──────────────┘
                            │
                            ▼
S100              ◇ IS CONTROL ◇         YES
            ◇ ENABLING SWITCH ◇ ──────────────┐
                    ◇ ON? ◇                    │
                            │                  │
S200                        │ NO        S300   │
  ┌─────────────────────┐   │      ┌───────────▼──────────┐
  ║ CONTROL DISABLING   ║   │      ║  CONTROL ENABLING    ║
  ║     PROCESSING      ║   │      ║     PROCESSING       ║
  └─────────────────────┘   │      └──────────────────────┘
                            │                  │
                            ▼                  │
                    ┌──────────────┐           │
                    │   RETURN     │◄──────────┘
                    └──────────────┘
```

# FIG. 4B

S200

START

S201 — IS INPUT OF CONTROL LEVER ABSENT?
YES

NO

S202 — GENERATE PILOT COMMAND PRESSURE Pi_ms ACCORDING TO CONTROL LEVER INPUT AMOUNT

S203 — OPEN DIRECTIONAL CONTROL VALVE ACCORDING TO PILOT COMMAND PRESSURE Pi_ms

S204 — IS FLOW DIVISION NECESSARY?
YES

NO

S205 — DO NOT OUTPUT COMMAND ELECTRIC SIGNAL TO SOLENOID PROPORTIONAL PRESSURE REDUCING VALVE

S210 — OUTPUT COMMAND ELECTRIC SIGNAL TO SOLENOID PROPORTIONAL PRESSURE REDUCING VALVE

S206 — SOLENOID PROPORTIONAL PRESSURE REDUCING VALVE DOES NOT GENERATE PILOT COMMAND PRESSURE Pi_fcv

S211 — SOLENOID PROPORTIONAL PRESSURE REDUCING VALVE GENERATES PILOT COMMAND PRESSURE Pi_fcv ACCORDING TO COMMAND ELECTRIC SIGNAL

S207 — FULLY OPEN PILOT VARIABLE RESTRICTOR

S212 — SHIFT PILOT SPOOL OF PILOT VARIABLE RESTRICTOR

S208 — FULLY OPEN MAIN VALVE OF AUXILIARY FLOW RATE CONTROLLER

S213 —
YES

NO

S214 — OPEN MAIN VALVE OF AUXILIARY FLOW RATE CONTROLLER ACCORDING TO OPENING OF PILOT VARIABLE RESTRICTOR

S216 — CLOSE MAIN VALVE OF AUXILIARY FLOW RATE CONTROLLER

S209 — CONTROL FLOW RATE SUPPLIED TO ACTUATOR BY DIRECTIONAL CONTROL VALVE

S215 — CONTROL FLOW RATE SUPPLIED TO ACTUATOR BY TOTAL OPENING AREA OF MAIN VALVE AND PILOT VARIABLE RESTRICTOR

CONTROL FLOW RATE SUPPLIED TO ACTUATOR BY ONLY OPENING AREA OF PILOT VARIABLE RESTRICTOR — S217

END

EP 4 001 519 B1

# FIG. 4C

```
                    ( START )
                        │
                        ▼
YES          ┌──────────────────────┐  S301
 ┌───────────│  IS INPUT OF         │
 │           │  CONTROL LEVER ABSENT?│
 │           └──────────────────────┘
 │                     │ NO
 │     S302            ▼
 │   ┌──────────────────────────────────────┐
 │   │  GENERATE PILOT COMMAND PRESSURE Pi_ms│
 │   │  ACCORDING TO CONTROL LEVER INPUT AMOUNT│
 │   └──────────────────────────────────────┘
 │     S303            ▼
 │   ┌──────────────────────────────────────┐
 │   │  OPEN DIRECTIONAL CONTROL VALVE ACCORDING│
 │   │  TO PILOT COMMAND PRESSURE Pi_ms     │
 │   └──────────────────────────────────────┘
 │     S304            ▼
 │   ┌──────────────────────────────────────┐
 │   │  CALCULATE TARGET FLOW RATE OF ACTUATOR│
 │   └──────────────────────────────────────┘
 │     S305            ▼
 │   ┌──────────────────────────────────────┐
 │   │  CALCULATE COMMAND ELECTRIC SIGNAL ON BASIS OF│
 │   │  TARGET FLOW RATE AND DIFFERENTIAL PRESSURE│
 │   │  ACROSS AUXILIARY FLOW RATE CONTROLLER│
 │   └──────────────────────────────────────┘
 │     S306            ▼
 │   ┌──────────────────────────────────────┐
 │   │  OUTPUT COMMAND ELECTRIC SIGNAL TO SOLENOID│
 │   │  PROPORTIONAL PRESSURE REDUCING VALVE│
 │   └──────────────────────────────────────┘
 │     S307            ▼
 │   ┌──────────────────────────────────────┐
 │   │  SOLENOID PROPORTIONAL PRESSURE REDUCING│
 │   │  VALVE GENERATES PILOT COMMAND PRESSURE Pi_fcv│
 │   └──────────────────────────────────────┘
 │     S308            ▼
 │   ┌──────────────────────────────────────┐
 │   │  SHIFT PILOT SPOOL OF PILOT VARIABLE RESTRICTOR│
 │   │  ACCORDING TO PILOT COMMAND PRESSURE Pi_fcv│
 │   └──────────────────────────────────────┘
 │                     │
 │                     ▼
 │           ┌──────────────────────┐ S309
 │           │  Pi_fcv > THRESHOLD  │───── YES ──┐
 │           │  VALUE S?            │            │
 │           └──────────────────────┘            │
 │     S310            │ NO            S313       ▼
 │   ┌──────────────────────┐      ┌──────────────────────┐
 │   │ OPEN MAIN VALVE OF   │      │ CLOSE MAIN VALVE OF  │
 │   │ AUXILIARY FLOW       │      │ AUXILIARY FLOW RATE  │
 │   │ RATE CONTROLLER      │      │ CONTROLLER           │
 │   │ ACCORDING TO         │      └──────────────────────┘
 │   │ OPENING OF PILOT     │              │
 │   │ VARIABLE RESTRICTOR  │              │
 │   └──────────────────────┘              │
 │     S312            ▼            S314    ▼
 │   ┌──────────────────────┐      ┌──────────────────────┐
 │   │ CONTROL FLOW RATE    │      │ CONTROL FLOW RATE    │
 │   │ SUPPLIED TO ACTUATOR │      │ SUPPLIED TO ACTUATOR │
 │   │ BY TOTAL OPENING AREA│      │ BY ONLY OPENING AREA │
 │   │ OF MAIN VALVE AND    │      │ OF PILOT VARIABLE    │
 │   │ PILOT VARIABLE       │      │ RESTRICTOR           │
 │   │ RESTRICTOR           │      └──────────────────────┘
 │   └──────────────────────┘              │
 │            │                            │
 └────────────┴──────────┬─────────────────┘
                         ▼
                     ( END )
```

S300

FIG. 5

# FIG. 6

OPENING AREA aMP OF MAIN VALVE

OPENING AREA aFB OF CONTROL VARIABLE RESTRICTOR

OPENING AREA aPS OF PILOT VARIABLE RESTRICTOR

aMP1

aPS1

0

OPENING AREA a

PILOT COMMAND PRESSURE Pi_fcv

REGION IN WHICH CONTROL IS PERFORMED BY TOTAL OF OPENING AREAS OF MAIN VALVE AND PILOT VARIABLE RESTRICTOR

REGION IN WHICH CONTROL IS PERFORMED BY ONLY OPENING AREA OF PILOT VARIABLE RESTRICTOR

Pi_fcv1  Pi_fcv2

Pi_fcv3 = THRESHOLD VALUE S

Pi_fcv4

EP 4 001 519 B1

# FIG. 7

OPENING AREA aMP OF MAIN VALVE

OPENING AREA aFB OF CONTROL VARIABLE RESTRICTOR

OPENING AREA aPS OF PILOT VARIABLE RESTRICTOR

aMP1

aPS1

0

OPENING AREA a

PILOT COMMAND PRESSURE Pi_fcv

REGION IN WHICH CONTROL IS PERFORMED BY TOTAL OF OPENING AREAS OF MAIN VALVE AND PILOT VARIABLE RESTRICTOR

REGION IN WHICH CONTROL IS PERFORMED BY ONLY OPENING AREA OF PILOT VARIABLE RESTRICTOR

Pi_fcv1  Pi_fcv2

Pi_fcv3
= THRESHOLD VALUE S

Pi_fcv4

EP 4 001 519 B1

# FIG. 8A

EP 4 001 519 B1

# FIG. 8B

SOLENOID VALVE UNIT

PIP2 PIBm2U PIBm2D PIAm1U PIAm1D

83a 83b 83c 83d 83e

71

Z

5

83

CONTROLLER

82

81a 81b

SBm SAm SBk PsP2 PyAm1 PyBm2 PzAm1 PzBm2

X Y

CONTROL ENABLING SWITCH

84

EP 4 001 519 B1

# FIG. 9

S300

START

S301 — IS INPUT OF CONTROL LEVER ABSENT?

YES

NO

S302 — GENERATE PILOT COMMAND PRESSURE Pi_ms ACCORDING TO CONTROL LEVER INPUT AMOUNT

S303 — OPEN DIRECTIONAL CONTROL VALVE ACCORDING TO PILOT COMMAND PRESSURE Pi_ms

S304 — CALCULATE TARGET FLOW RATE OF ACTUATOR

S305 — CALCULATE COMMAND ELECTRIC SIGNAL ON BASIS OF TARGET FLOW RATE AND DIFFERENTIAL PRESSURE ACROSS AUXILIARY FLOW RATE CONTROLLER

S306 — OUTPUT COMMAND ELECTRIC SIGNAL TO SOLENOID PROPORTIONAL PRESSURE REDUCING VALVE

S307 — SOLENOID PROPORTIONAL PRESSURE REDUCING VALVE GENERATES PILOT COMMAND PRESSURE Pi_fcv

S308 — SHIFT PILOT SPOOL OF PILOT VARIABLE RESTRICTOR ACCORDING TO PILOT COMMAND PRESSURE Pi_fcv

S309 — Pi_fcv > THRESHOLD VALUE S?

YES

NO

S310 — OPEN MAIN VALVE OF AUXILIARY FLOW RATE CONTROLLER ACCORDING TO OPENING OF PILOT VARIABLE RESTRICTOR

S312 — CONTROL FLOW RATE SUPPLIED TO ACTUATOR BY TOTAL OPENING AREA OF MAIN VALVE AND PILOT VARIABLE RESTRICTOR

S313 — CLOSE MAIN VALVE OF AUXILIARY FLOW RATE CONTROLLER

S313a — CALCULATE COMMAND ELECTRIC SIGNAL ON BASIS OF TARGET FLOW RATE AND DIFFERENTIAL PRESSURE ACROSS PILOT VARIABLE RESTRICTOR

S313b — OUTPUT COMMAND ELECTRIC SIGNAL TO SOLENOID PROPORTIONAL PRESSURE REDUCING VALVE

S313c — SOLENOID PROPORTIONAL PRESSURE REDUCING VALVE GENERATES PILOT COMMAND PRESSURE Pi_fcv

S313d — SHIFT PILOT SPOOL OF PILOT VARIABLE RESTRICTOR ACCORDING TO PILOT COMMAND PRESSURE Pi_fcv

S314 — CONTROL FLOW RATE SUPPLIED TO ACTUATOR BY ONLY OPENING AREA OF PILOT VARIABLE RESTRICTOR

END

**EP 4 001 519 B1**

**REFERENCES CITED IN THE DESCRIPTION**

**Patent documents cited in the description**

- JP 3056254 B
- JP 3144915 B
- JP H06294402 A